# EUROPÄISCHE PATENTSCHRIFT

(11) **EP 3 113 992 B1**
(45) Veröffentlichungstag und Bekanntmachung des Hinweises auf die Patenterteilung: **31.01.2018**
(21) Anmeldenummer: 15709643.9
(22) Anmeldetag: 03.03.2015
(51) Int. Cl.: B60T 13/36, B60T 13/56, B60T 15/04, B60T 15/30, B60T 17/22

(54) **BREMSMODUL FÜR GÜTERWAGEN**
BRAKING MODULE FOR FREIGHT CARS
MODULE DE FREINAGE POUR WAGON DE MARCHANDISES

(30) Priorität: 05.03.2014 DE 102014102882
(43) Veröffentlichungstag der Anmeldung: 11.01.2017
(73) Patentinhaber: KNORR-BREMSE Systeme für Schienenfahrzeuge GmbH, 80809 München (DE)
(72) Erfinder: WACH, Jörg-Johannes, 81247 München (DE); ANTON, Thomas, 85614 Kirchseeon (DE)
(86) Internationale Anmeldenummer: PCT/EP2015/054360
(87) Internationale Veröffentlichungsnummer: WO 2015/132229

(56) Entgegenhaltungen:
- EP-A2- 0 976 633
- WO-A1-2004/080775
- WO-A2-02/22421
- WO-A2-2013/136306
- DE-A1- 10 332 034
- US-A1- 2013 134 769
- US-B1- 6 669 308

## Beschreibung

Die vorliegende Erfindung betrifft ein Bremssystem für einen Güterwagen eines Schienenfahrzeugs, umfassend mindestens zwei Reibungsbremsen zur Verzögerung des Güterwagens, ein Steuerventil, das nach Maßgabe eines Drucks in der Hauptluftleitung einen entsprechenden Bremszylinderdruck oder einen als Druckverlauf dienenden Vorsteuerdruck für einen Vorsteuerraum bildet, ein Relaisventil zur phasengleichen Übertragung des in dem Vorsteuerraum erzeugten Druckverlaufs auf mindestens einen Bremszylinder, der einen Bremsdruck für die mindestens zwei Reibungsbremsen erzeugt und über ein Bremsgestänge an die mindestens zwei Reibungsbremsen leitet, einen Vorratsluftbehälter zur Speicherung der Vorratsluft für den mindestens einen Bremszylinder und eine Vielzahl von handbetätigbaren Aktuatoren zur Umsetzung des Bremsdrucks in eine mechanische Kraft.

Das Einsatzgebiet der vorliegenden Erfindung erstreckt sich vornehmlich auf den Schienenfahrzeugbau, insbesondere auf Güterwagen. Schienenfahrzeuge haben meist eine selbsttätige automatische Druckluftbremse, bei der die Absenkung des Druckes in einer Hauptluftleitung, ausgehend von einem Regelbetriebsdruck, die Ausbildung eines Bremszylinderdrucks hervorruft. Die Übertragungsfunktion vom sinkenden Druck in der Hauptluftleitung zum steigenden Bremszylinderdruck und umgekehrt wird von Steuerventilen ausgeführt.

Das Aufbauprinzip von Güterwagenuntergestellen ist seit Jahrzehnten aus Kostengründen unverändert, wobei die einzelnen Elemente des Bremssystems separat an der Güterwagenrahmenkonstruktion angeordnet sind. In der Regel ist ein (häufig zweiachsiger) Güterwagen mit einer selbsttätigen, indirekt wirkenden Druckluftbremse mit zumeist Lastabbremsung ausgerüstet (automatisch, einstufig, mehrstufig - teils mit Knickventil). Das Bremssystem eines Güterwagens umfasst neben der Hauptluftleitung mit den Luftabsperrhähnen und Bremskupplungen ein Steuerventil verbunden mit der Hauptluftleitung, einen Vorratsluftbehälter und einen Bremszylinder. Mit von beiden Wagenseiten aus zu betätigenden Bremsumstellvorrichtungen (z.B. Ein/Aus, GP-Wechsel oder SL) kann die Bremsausrüstung des Fahrzeugs von der Hauptluftleitung pneumatisch getrennt werden, so dass die Hauptluftleitung nur noch als Durchgangsleitung dient. Die Bremse des Güterwagens ist damit unwirksam. Das Steuerventil wertet die Brems- beziehungswiese Lösesignale der Hauptluftleitung aus und erzeugt den entsprechenden Bremszylinderdruck. In Lösestellung wird der Druck im Vorratsluftbehälter auf das Druckniveau der Hauptluftleitung nachgefüllt. Wird der Druck in der Hauptluftleitung um die erste Bremsstufe abgesenkt, so geht das Steuerventil in Bremsstellung und verbindet den Vorratsluftbehälter mit dem Bremszylinder. Der Bremszylinder erzeugt eine Kraft, die über das Bremsgestänge und die Reibelemente auf die Radsätze des Fahrzeugs übertragen wird. Die hier entstehenden Reibmomente verzögern das Fahrzeug.

Das regelbare Lastbremsventil, das meist direkt am Steuerventil angebaut ist, hat die Aufgabe, den Bremszylinderdruck in Abhängigkeit von der Beladung des Fahrzeugs zu beeinflussen. Dies dient zur sogenannten Lastabbremsung. Je höher die Beladung des Fahrzeugs ist, umso größer ist der Bremszylinderdruck. In der Regel ist das Lastbremsventil mit zwei in Reihe geschalteten Wiegeventilen pneumatisch verbunden, wobei je Radsatz / Drehgestell jeweils ein Wiegeventil in die Aufhängung eingebaut ist. Die erforderliche Versorgungsluft wird dem Vorratsluftbehälter entnommen.

Im Wesentlichen umfasst ein Bremssystem für Güterwagen entweder einen Mittenbremszylinder mit Gestängesteller, Bremsgestänge, Bremsscheibe und Zangen oder Bremsklotzeinheiten, Bremssteuerung und -betätigung oder mehrere Bremszylinder mit Gestängesteller, Bremsgestänge, Bremsscheibe und Zangen oder Bremsklotzeinheiten, Bremssteuerung und -betätigung. Zur Bremssteuerung dient entweder ein Steuerventil oder ein Steuerventil mit Relaisventil (Lastbremsventile oder Druckumsetzer oder Druckübersetzer). Denkbar ist auch ein Steuerventil mit ein oder mehreren Lastbremsventilen und Wiegeventilen. Aus dem allgemeinen Stand der Technik gehen aber auch Bremssysteme hervor, mit einer Kompaktbremszangeneinheit, Bremssteuerung und -betätigung oder andere Kombinationen der oben genannten Elemente des Bremssystems.

ein derartiges Bremssystem ist beispielsweise aus der US 6 669 308 B1 bekannt. Dadurch, dass die zuvor genannten Elemente des Bremssystems einzeln über jeweilige Halter oder Träger an dem Güterwagen befestigt sind, ist die Integration des Bremssystems im Güterwagen relativ zeitintensiv und weist eine Vielzahl von Schnittstellen auf. Ferner erfordert dies in der Regel auch eine individuelle auf den jeweiligen Güterwagen bezogene Anpassung der Anordnung.
Daher ist es die Aufgabe der vorliegenden Erfindung, ein optimiertes Bremssystem für einen Güterwagen zu schaffen, der die oben genannten Nachteile im Wesentlichen kompensiert und dadurch sowohl die Konstruktion von Güterwagen, insbesondere deren Rahmenkonstruktion, als auch die Integration der Elemente des Bremssystems vereinfacht.
Die Aufgabe wird ausgehend von einem Bremssystem gemäß Anspruch 1 gelöst. Die nachfolgenden abhängigen Ansprüche geben vorteilhafte Weiterbildungen der Erfindung an.
Erfindungsgemäß sind das Steuerventil, der Vorratsluftbehälter und die Vielzahl von handbetätigbaren Aktuatoren zu einem Bremsmodul zusammengefasst und an einem gemeinsamen Rahmen vormontiert, wobei der Rahmen an dem Güterwagen angeordnet ist. Mithin werden die wesentlichen Elemente des Bremssystems zu einer Einheit, nämlich zu dem Bremsmodul zusammengefasst. Dadurch lässt sich der Aufwand zur Integration des Bremssystems in dem Güterwagen deutlich reduzieren, da sich die Schnittstellen zwischen Güterwagen und Bremsmodul auf ein Mindestmaß verringern. Ferner reduziert das standardisierte Bremsmodul den Einmalaufwand für die Konstruktion des Güterwagens. Durch die einheitliche Anordnung der Elemente des Bremssystems zueinander lassen sich zum Einen die Betriebsabläufe beschleunigen und zum Anderen Verwechslungen und daraus folgende Fehlbedienhandlungen vermeiden. Darüber hinaus lassen sich durch engere Fertigungstoleranzen die Bewegungen der mechanischen Komponenten der einzelnen Elemente zueinander einschränken, womit die Geräuschemission abgesenkt werden kann. Ferner resultiert daraus auch eine Verschleißreduzierung an den mechanischen Komponenten.

Die zuvor genannte erfindungsgemäße Ausbildung des Bremssystems eignet sich insbesondere für als Mittenbremszylinder ausgebildete Bremszylinder, die über die Übertragungsvorrichtung, bevorzugt in Form eines Bremsgestänges, mit den Reibungsbremsen zusammenwirken. Vorteilhaft sind hierbei das Steuerventil (ggf. zusammen mit einem Relaisventil), der Vorratsluftbehälter und die Vielzahl von handbetätigbaren Aktuatoren zusammen mit der mindestens einen Übertragungsvorrichtung und/oder dem mindestens einen Bremszylinder zu dem Bremsmodul zusammengefasst und an dem gemeinsamen Rahmen vormontiert.

Es ist jedoch auch denkbar, einen Güterwagen mit drehgestellbezogenen Bremsen zu optimieren. In diesem Fall ist die Übertragungsvorrichtung eine Druckluftleitung - die Bremsgestänge werden also durch die Druckluftleitungen ersetzt. Die Bremszylinder sind dann in den Drehgestellen an den Reibungsbremsen angeordnet.

Vorzugsweise sind das Steuerventil und das Relaisventil zu einer Steuereinheit zusammengefasst. Die Steuereinheit ist besonders bevorzugt in einem Gehäuse angeordnet.

Die Erfindung schließt die technische Lehre ein, dass das Bremsgestänge eine Übersetzungseinheit sowie eine Nachstellungseinheit aufweist. Das Bremsgestänge hat insbesondere die Aufgabe, die im Bremszylinder erzeugte Kolbenkraft über Hebel, Gelenke und Stangen gleichmäßig auf die Reibungsbremse zu übertragen. Die Übersetzung des Bremsgestänges vergrößert die zugehörigen Bremskräfte. Die Nachstellung kann besonders bevorzugt über einen Bremsgestängesteller realisiert werden. Der Bremsgestängesteller dient dazu, Verschleiß zu kompensieren und eine optimale Kraftübertragung innerhalb des Bremsgestänges zu gewährleisten.

Des Weiteren bevorzugt ist das Bremsmodul über eine lösbare Schraubverbindung an dem Güterwagen befestigt. Vorzugsweise ist um den Rahmen des Bremsmoduls herum ein Gehäuse angeordnet, dass das Bremsmodul abdeckt und somit schützt.

Gemäß einem bevorzugten Ausführungsbeispiel weist das Bremsmodul mindestens eine pneumatische Schnittstelle zur Aufnahme eines von mindestens einem Wiegeventil generierten Steuerdrucks zur Lastabbremsung auf. Durch das mindestens eine Wiegenventil kann eine Lastabbremsung erfolgen, wobei ein Teil des Fahrzeuggewichtes abgegriffen wird und auf einem Wiegeventil abgestützt wird. Das Wiegeventil dient zur Bildung eines lastproportionalen Steuerdrucks.

Weitere, die Erfindung verbessernde Maßnahmen werden nachstehend gemeinsam mit der Beschreibung bevorzugter Ausführungsbeispiele der Erfindung anhand der Figuren näher dargestellt. Es zeigen:
- Figur 1: eine erste schematische Ansicht des erfindungsgemäßen Bremssystems, und
- Figur 2: eine zweite schematische Ansicht des erfindungsgemäßen Bremssystems gemäß einem zweiten Ausführungsbeispiel.

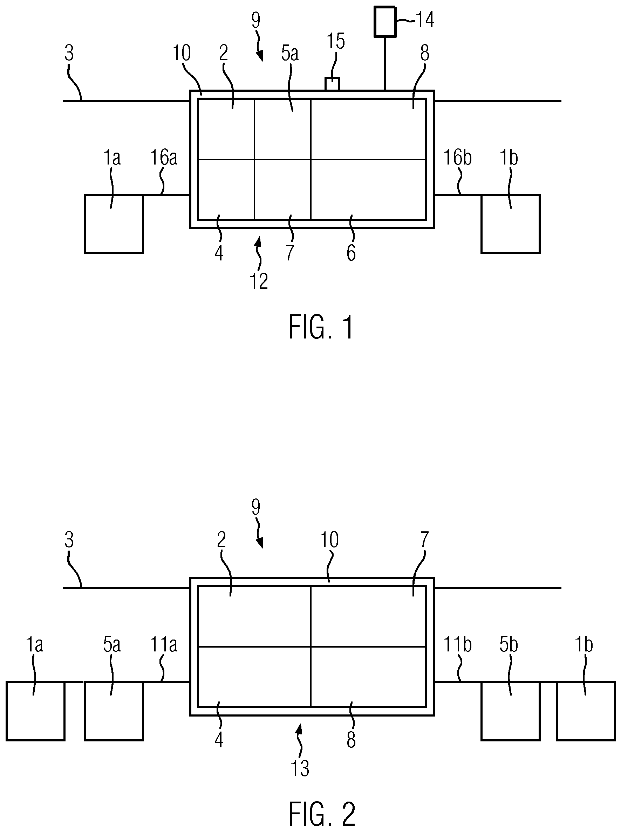

Gemäß Figur 1 weist ein - hier nicht dargestellter - Güterwagen eines Schienenfahrzeugs ein Bremsmodul 9 auf, umfassend ein Steuerventil 2, ein Relaisventil 4, ein Bremszylinder 5a, ein Vorratsluftbehälter 7, ein Bremsgestänge 6 und eine Vielzahl von handbetätigbaren Aktuatoren 8 auf. Das Bremsmodul 9 umfasst ferner einen Rahmen 10, an dem die zuvor genannten Bauteile vormontiert sind. Der Rahmen 10 ist über eine lösbare Schraubverbindung 15 an dem - hier nicht dargestellten - Güterwagen befestigt. Das Bremsmodul 9 wirkt über jeweils ein Gestänge 16a, 16b auf zwei Reibungsbremsen 1a, 1b zur mechanischen Kraftübertragung auf die Reibungsbremsen 1a, 1b. Ferner weist das Bremsmodul 9 jeweils eine pneumatische Schnittstelle zur Hauptluftleitung 3 und zu einem Wiegeventil 14 auf.

Nach Maßgabe eines Drucks in der Hauptluftleitung 3 bildet das Steuerventil 2 einen entsprechenden Bremszylinderdruck oder einen als Druckverlauf dienenden Vorsteuerdruck für einen Vorsteuerraum aus, wobei das Relaisventil 4 zur phasengleichen Übertragung des in dem Vorsteuerraum erzeugten Druckverlaufs auf den Bremszylinder 5a dient. Dieser erzeugt einen Bremsdruck für die beiden Reibungsbremsen 1a, 1b, die über das Bremsgestänge 6 betätigbar sind. Der Vorratsluftbehälter 7 dient zur Speicherung der Vorratsluft für den Bremszylinder 5a. Das Steuerventil 2 und das Relaisventil 4 sind zu einer Steuereinheit 12 zusammengefasst.

Gemäß Figur 2 umfasst das Bremssystem für den - hier nicht dargestellten - Güterwagen das Bremsmodul 9, das seinerseits ein Steuerventil 2, ein Relaisventil 4, einen Vorratsluftbehälter 7 und eine Vielzahl von handbetätigbaren Aktuatoren 8 aufweist. Die zuvor genannten Elemente sind an einem Rahmen 10 vormontiert, wobei der Rahmen 10 an dem - hier nicht dargestellten - Güterwagen angeordnet ist. Um den Rahmen 10 des Bremsmoduls 9 herum ist ein Gehäuse 13 angeordnet. Zwei Bremszylinder 5a, 5b erzeugen einen Bremsdruck für die zwei Reibungsbremsen 1a, 1b und werden jeweils über eine Druckluftleitung 11a, 11b von dem Steuerventil 2 gespeist. Die Bremszylinder 5a, 5b sind somit in den jeweiligen Drehgestellen an den Reibungsbremsen 1a, 1b angeordnet.

Die Erfindung ist nicht beschränkt auf das vorstehend beschriebene bevorzugte Ausführungsbeispiel. Es sind vielmehr auch Abwandlungen hiervon denkbar, welche vom Schutzbereich der nachfolgenden Ansprüche mit umfasst sind. So ist es beispielsweise auch möglich, dass das Bremsmodul 9 auch zwei pneumatische Schnittstellen zu zwei Wiegeventilen 14a, 14b aufweist.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 1a, 1b: Reibungsbremse
- 2: Steuerventil
- 3: Hauptluftleitung
- 4: Relaisventil
- 5a, 5b: Bremszylinder
- 6: Bremsgestänge
- 7: Vorratsluftbehälter
- 8: Aktuator
- 9: Bremsmodul
- 10: Rahmen
- 11a, 11b: Druckluftleitung
- 12: Steuereinheit
- 13: Gehäuse
- 14a, 14b: Wiegeventil
- 15: Schraubverbindung
- 16a, 16b: Gestänge

## Patentansprüche

1. Bremssystem für einen Güterwagen eines Schienenfahrzeugs, umfassend mindestens zwei Reibungsbremsen (1a, 1b) zur Verzögerung des Güterwagens, ein Steuerventil (2), das nach Maßgabe eines Drucks in der Hauptluftleitung (3) einen Ausgangsdruck zur Übertragung auf mindestens einen Bremszylinder (5a) erzeugt, wobei der mindestens eine Bremszylinder (5a) eine Bremskraft für die mindestens zwei Reibungsbremsen (1a, 1b) erzeugt und über mindestens eine Übertragungsvorrichtung (6) an die mindestens zwei Reibungsbremsen (1a, 1b) leitet, einen Vorratsluftbehälter (7) zur Speicherung der Vorratsluft für den mindestens einen Bremszylinder (5) und eine Vielzahl von handbetätigbaren Aktuatoren (8) zur manuellen Bedienung des Steuerventils (2),
**dadurch gekennzeichnet, dass** das Steuerventil (2), der Vorratsluftbehälter (7) und die Vielzahl von handbetätigbaren Aktuatoren (8) zu einem Bremsmodul (9) zusammengefasst sind und an einem gemeinsamen Rahmen (10) vormontiert sind, wobei der Rahmen (10) an dem Güterwagen angeordnet ist.

2. Bremssystem für einen Güterwagen eines Schienenfahrzeugs gemäß Anspruch 1, wobei der Ausgangsdruck des Steuerventils (2) als Vorsteuerdruck für ein Relaisventil (4) dient und von dem Relaisventil (4) in einen Steuerdruck für den mindestens einen Bremszylinder (5a) übersetzt wird.

3. Bremssystem für einen Güterwagen eines Schienenfahrzeugs gemäß Anspruch 1 oder 2, wobei das Steuerventil (2), der Vorratsluftbehälter (7) und die Vielzahl von handbetätigbaren Aktuatoren (8) zusammen mit der mindestens einen Übertragungsvorrichtung (6) zu dem Bremsmodul (9) zusammengefasst und an dem gemeinsamen Rahmen (10) vormontiert sind.

4. Bremssystem für einen Güterwagen eines Schienenfahrzeugs gemäß Anspruch 1 oder 2, wobei das Steuerventil (2), der Vorratsluftbehälter (7) und die Vielzahl von handbetätigbaren Aktuatoren (8) zusammen mit der mindestens einen Übertragungsvorrichtung (6) sowie dem mindestens einen Bremszylinder (5a) zu dem Bremsmodul (9) zusammengefasst und an dem gemeinsamen Rahmen (10) vormontiert sind.

5. Bremssystem nach einem der Ansprüche 2 bis 4,
**dadurch gekennzeichnet, dass** das Steuerventil (2) und das Relaisventil (4) zu einer Steuereinheit (12) zusammengefasst sind.

6. Bremssystem nach einem der vorhergehenden Ansprüche,
**dadurch gekennzeichnet, dass** die Übertragungsvorrichtung (6) ein Bremsgestänge (6) ist und optional eine Übersetzung sowie eine Nachstellung aufweist.

7. Bremssystem nach Anspruch 1 oder 2,
**dadurch gekennzeichnet, dass** die Übertragungsvorrichtung (6) eine Druckluftleitung (11a, 11b) ist.

8. Bremssystem nach einem der vorhergehenden Ansprüche,
**dadurch gekennzeichnet, dass** das Bremsmodul (9) über eine lösbare Schraubverbindung (15) an dem Güterwagen befestigt ist.

9. Bremssystem nach einem der vorhergehenden Ansprüche,
**dadurch gekennzeichnet, dass** um den Rahmen (10) des Bremsmoduls (9) herum ein Gehäuse (13) angeordnet ist.

10. Bremssystem nach einem der vorhergehenden Ansprüche,
**dadurch gekennzeichnet, dass** das Bremsmodul (9) mindestens eine pneumatische Schnittstelle zur Aufnahme eines von mindestens einem Wiegeventil (14) generierten Steuerdrucks zur Lastabbremsung aufweist.

## Claims

1. Brake system for a freight car of a rail vehicle, comprising at least two friction brakes (1a, 1b) for braking the freight car, a control valve (2) which, in accordance with a pressure in the main air line (3), produces an initial pressure for transmission to at least one brake cylinder (5a), wherein the at least one brake cylinder (5a) produces a braking force for the at least two friction brakes (1a, 1b) and passes it by way of at least one transmission device (6) to the at least two friction brakes, an air reservoir (7) for storing the air supply for the at least one brake cylinder (5), and a plurality of manually operated actuators (8) for the manual operation of the control valve (2),
**characterised in that** the control valve (2), the air reservoir (7) and the plurality of manually operated actuators (8) are combined in a brake module (9) and are preassembled onto a common frame (10), the said frame being arranged on the freight car.

2. Brake system for a freight car of a rail vehicle according to Claim 1, wherein the initial pressure of the control valve (2) serves as the pilot pressure for a relay valve (4) and is converted by the relay valve (4) into a control pressure for the at least one brake cylinder (5a).

3. Brake system for a freight car of a rail vehicle according to Claims 1 or 2, wherein the control valve (2), the air reservoir (7) and the plurality of manually operated actuators (8) are combined with the at least one transmission device (6) in the brake module (9) and are preassembled onto the common frame (10).

4. Brake system for a freight car of a rail vehicle according to Claims 1 or 2, wherein the control valve (2), the air reservoir (7) and the plurality of manually operated actuators (8) are combined with the at least one transmission device (6) and with the at least one brake cylinder (5a) in the brake module (9) and are preassembled onto the common frame (10).

5. Brake system according to any of Claims 2 to 4,
**characterised in that** the control valve (2) and the relay valve (4) are combined in a control unit (12).

6. Brake system according to any of the preceding claims,
**characterised in that** the transmission device (6) is a brake linkage (6) and optionally comprises a gear ratio and adjustment means.

7. Brake system according to Claims 1 or 2,
**characterised in that** the transmission device (6) is a compressed air line (11a, 11b).

8. Brake system according to any of the preceding claims,
**characterised in that** the brake module (9) is fixed on the freight car by a detachable bolt connection.

9. Brake system according to any of the preceding claims,
**characterised in that** a housing (13) is arranged around the frame (10) of the brake module (9).

10. Brake system according to any of the preceding claims,
**characterised in that** the brake module (9) has at least one pneumatic interface for receiving a control pressure generated by at least one load-sensitive valve (14) for loaded braking.

## Revendications

1. Système de freinage d'un wagon à marchandises d'un véhicule ferroviaire, comprenant au moins deux freins (1a, 1b) à friction, pour ralentir le wagon à marchandises, une vanne (2) pilote, qui, en fonction d'une pression dans un conduit (3) d'air principal, produit une pression de sortie à transmettre à au moins un cylindre (5a) de frein, le au moins un cylindre (5a) de frein produisant une force de freinage pour les au moins deux freins (1a, 1b) à friction et l'appliquant, par au moins un dispositif (6) de transmission, aux au moins deux freins (1a, 1b) à friction, un réservoir (7) d'air pour accumuler de l'air de réserve pour le au moins un cylindre (5) de frein et une pluralité d'actionneurs (8) manoeuvrables à la main pour la commande manuelle de la vanne (2) pilote, **caractérisé en ce que** la vanne (2) pilote, le réservoir (7) d'air et la pluralité d'actionneurs (8) manoeuvrables à la main sont rassemblés en un module (9) de frein et sont montés à l'avance sur un cadre (10) commun, le cadre (10) étant mis sur le wagon à marchandise.

2. Système de freinage d'un wagon à marchandise d'un véhicule ferroviaire suivant la revendication 1, dans lequel la pression de sortie de la vanne (2) pilote sert de pression de précommande pour une vanne (4) relais et est transformée par la vanne (4) relais en un pression de commande du au moins un cylindre (5a) de frein.

3. Système de freinage d'un wagon à marchandise d'un véhicule ferroviaire suivant la revendication 1 ou 2, dans lequel la vanne (2) pilote, le réservoir (7) à air et la pluralité d'actionneurs (8) manoeuvrables à la main sont rassemblés ensemble avec le au moins un dispositif (6) de transmission en le module (9) de freinage et sont montés à l'avance sur le cadre (10) commun.

4. Système de freinage d'un wagon à marchandise d'un véhicule ferroviaire suivant la revendication 1 ou 2, dans lequel la vanne (2) pilote, le réservoir (7) à air et la pluralité d'actionneurs (8) manoeuvrables à la main sont rassemblés ensemble avec le au moins un dispositif (6) de transmission ainsi que le au moins un cylindre (5a) de frein en le module (9) de freinage et sont montés à l'avance sur le cadre (10) commun.

5. Système de freinage suivant l'une des revendications 2 à 4, **caractérisé en ce que** la vanne (2) pilote et la vanne (4) relais sont rassemblées en une unité (12) de commande.

6. Système de freinage suivant l'une des revendications précédentes,
**caractérisé en ce que** le dispositif (6) de transmission est une timonerie (6) de frein et a éventuellement une démultiplication ainsi qu'un réglage.

7. Système de freinage suivant la revendication 1 ou 2, **caractérisé en ce que** le dispositif (6) de transmission est un conduit (11a, 11b) d'air comprimé.

8. Système de freinage suivant l'une des revendications précédentes,
**caractérisé en ce que** le module (9) de freinage est fixé au wagon à marchandises par un vissage (15) amovible.

9. Système de freinage suivant l'une des revendications précédentes,
**caractérisé en ce qu'**une enveloppe (13) est disposée tout autour du cadre (10) du module (9) de freinage.

10. Système de freinage suivant l'une des revendications précédentes,
**caractérisé en ce que** le module (9) de freinage a, pour le freinage proportionnel à la charge, au moins une interface pneumatique de réception d'une pression de commande produite par au moins un détendeur (14) de pesée.
